# EUROPEAN PATENT APPLICATION

(11) **EP 0 981 103 A1**
(43) Date of publication of application: **23.02.2000**
(21) Application number: 99116078.9
(22) Date of filing: 17.08.1999
(51) Int. Cl.: G06K 7/00

(54) **Smart card connector for different thickness cards**

(30) Priority: 18.08.1998 EP 98402077
(71) Applicant: THE WHITAKER CORPORATION, Wilmington, Delaware 19808 (US)
(72) Inventor: Lindeberg, Paul, 78600 Maisons-Laffitte (FR)
(74) Representative: Heinz-Schäfer, Marion

(57) **Abstract**

A smart card connector (2) comprises a single integrally moulded housing (4) and a plurality of terminals (6) stitched into corresponding cavities (8) of the housing in a vertical direction (V) through the PCB mounting face (30) thereof. The terminals (6) are retained to the housing at PCB connection sections (16) such that the length of the spring arm between the connection section and contact portion (14) is maximised. The elastic displacement range of the contact portion (14) is thus sufficient to pre-stress the contacts and receive cards of different thicknesses, for example single and double thickness smart cards, in a particularly cost-effective arrangement.

## Description

This invention relates to a connector for contacting smart cards with a range of different thicknesses.

A smart card connector assembly or reader is described in US 5,198,645 for connection to smart cards having single or double thickness. In EP-A-742529 a smart card connector is described for connection to smart cards of different thicknesses. In many applications, the connectors are mounted on printed circuit boards where the footprint (i.e. the position of the PCB connection portion of the terminals) are specified by a standard, and the position of the contact protrusions of the terminals are also specified by a standard such that the length and thus the flexibility of the terminal is limited by these factors. In both of the above mentioned references, elastic means are thus provided for pressing the card against a bearing surface of the connector housing through which contact portions of the smart card terminals project for biasing against conductive circuit pads of the smart card. The elastic means thus ensure that thin cards are pressed against the bearing surface and the resilient terminals bias in the same way against the conductive circuit traces of the card as for thick cards. The additional elastic means however complicates the design of the connector and increases its cost. It would be advantageous to simplify the design of smart card connectors, reduce the number of parts and the manufacturing cost, whilst nevertheless providing a reliable connection to cards having a range of thicknesses (for example single to double thickness smart cards from 0.6-1.8 mm).

Many single thickness smart card connectors exist, such as shown in US 4,900,272, or US 5,334,827. In the latter references, only cards of a specific thickness (typically around 0.8 mm) may be employed with the connectors disclosed, as the terminals, inter alia, have a limited elastic range. For example, many smart card connectors have overmoulded terminals as shown in US 4,900,272, whereby the flexibility of the spring arm is limited to the portion of terminal extending between the contact protrusion and housing portion moulded over the terminal. In Us 5,334,827, the terminals are mounted in a housing by interengaging interference means rather than overmoulding. The terminals are pre-stressed in order to increase the contact force against the smart card, however support means for securing and assisting in pre-stressing the terminals are positioned at an intermediate portion along the spring arm of the terminals such that the elastic displacement range of the contact protrusions are limited. Conventional single thickness card connectors are thus not able to receive cards of a large range of thickness (single to double).

In reference WO 95/18421, a memory card connector is shown whereby the elastic displacement range of the terminals is increased by providing the terminals with a lateral support extension. This however has the disadvantage of requiring lateral space which limits the ability to position contacts adjacent each other in a close spacing, and additionally such terminals are inserted into the connector housing from side edges of the housing rather than from a bottom or top surface which complicates assembly.

It is an object of this invention to provide a simple, cost-effective, compact and reliable smart card connector for connection to cards of different thicknesses, in particular single and double thicknesses.

Objects of this invention have been achieved by providing the smart card connector according to claim 1. Disclosed herein is a smart card connector for connection to smart cards of different thicknesses varying from single to double thickness, the cards having conductive circuit pads thereon, the smart card connector comprising an insulative housing and a plurality of electrical terminals mounted corresponding cavities in the housing in a juxtaposed arrangement, each terminal comprising a contact portion biased into a card receiving slot of the housing, a connection portion for connection to a circuit board, and a spring arm portion extending therebetween, the circuit board connection portion and spring arm portions being attached integrally together via an approximately 90° bend portion such that the connection and spring arm portions extend roughly perpendicularly with respect to each other, wherein the terminal is secured to the housing at the connection portion and the spring arm is free to bias within the corresponding terminal receiving slot towards a circuit board mounting face of the connector housing along substantially the whole length between the connection portion and the contact portion.

Advantageously therefore, substantially the whole distance between the PCB footprint for receiving the connection section, and the position of the smart card contact pads is used for the spring arm such that the maximum flexible range of the terminals are used, and in addition the terminals are simple to manufacture and assemble in the housing.

The terminals may be assembled to the housing by stitching into the terminal receiving cavities in a direction substantially orthogonal to the plane of the card receiving slot through the PCB mounting face of the connector housing.

The terminals may be pre-stressed by abutment of an end of the spring arm or the contact portion against shoulders of the housing. Advantageously, the pre-stressing reduces the difference in contact force when receiving cards of single or double thickness.

The connector housing may be moulded as an integral single moulding comprising lateral, top, and bottom wall portions forming guides for guiding the card in the card receiving slot, for a particularly cost-effective design. The top and bottom guides may be provided such that they do not overlap each other when viewing in a direction orthogonal to the plane of the card receiving slot or PCB mounting surface such that the single integral moulding maybe produced in a simple die without moving core pins.

The terminals may be provided with lateral extensions or barbs protruding beyond side edges of the connection portion for an interference fit in corresponding lateral slots in the terminal receiving cavities of the housing such that the terminals can be simply stitched into the terminal receiving housing cavities from the PCB mounting face and automatically secured by the interference fit of

the connection portion with the housing. Further advantageous aspects of the invention are set forth in the claims, or will be apparent from the following description and drawings.

An embodiment of this invention will be described by way of example with reference to the accompanying drawings in which;

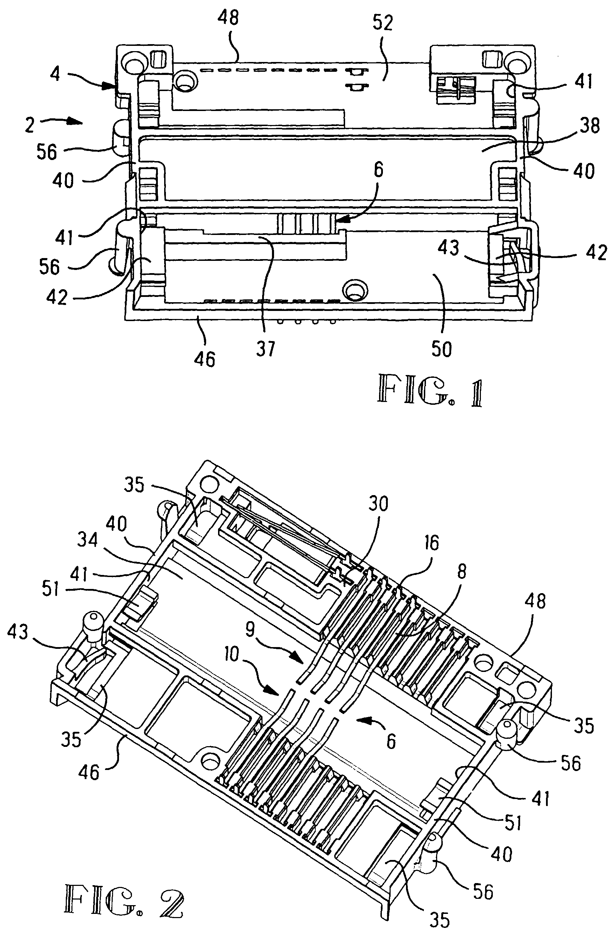

Figure 1 is a perspective view of a smart card connector according to this invention;
Figure 2 is further perspective view of the smart card connector looking towards a mounting or bottom face thereof;

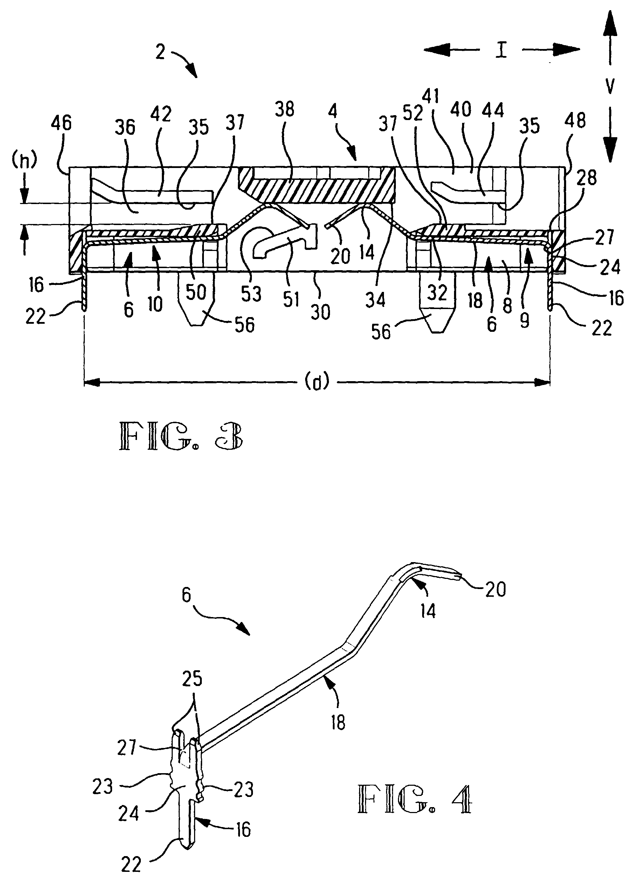

Figure 3 is a cross-sectional view through the smart card connector;
Figure 4 is a perspective view of a terminal of the connector.

Referring to the figures, a smart card connector 2 comprises an insulative housing 4 and a plurality of terminals 6 mounted in corresponding cavities 8 of the housing 4. The terminals 6 are arranged in two rows 9, 10, the rows arranged with respect to each other in substantially mirror image symmetry, whereby the terminals 6 of each row 9, 10 are arranged in a juxtaposed manner.

The contact pads of a smart card (not shown) are arranged in a spacing according to a widely used standard, whereby the terminals of the smart card must be adapted to interconnect to the standard dimensions. The connector 2 is for mounting on a printed circuit board (not shown), and similarly the connection holes in the circuit board are arranged along a standard configuration that is widely used. The terminals should thus also be adapted to interconnect to the printed circuit board connection configuration (also called "footprint").

Each terminal 6 comprises a contact portion 14, a circuit board connection portion 16 and a spring arm portion 18 extending therebetween. The contact portion 14 is in the form of an arcuate protrusion proximate a free end 20 of the terminal such that the spring arm 18 acts as a cantilever beam spring for the contact portion 14. The spring arm 18 in this embodiment extends approximately perpendicularly to the PCB connection portion 16, or at least with respect to an attachment section 24 of the connection portion 16 received within the housing 4. The connection portion 16 comprises a pin contact 22 extending from the attachment section 24 below a PCB mounting face 30 of the housing for insertion in plated through-holes of the circuit board. The attachment section 24 is for securing the terminal 6 in the housing 4. The attachment section 24 is provided with lateral projections 23 or barbs which are retention members that engage in an interference fit in a complementary attachment section receiving slot 28 of the housing. The slot 28 and attachment section 24 extend substantially in the vertical direction (V) which is substantially orthogonal to the card insertion direction (I).

The terminals 6 are assembled into the housing cavity 8 by stitching (insertion) into the cavities 8 from and through the mounting face 30 of the connector housing. The contacts 6 are thus stitched in the vertical direction (V) into the cavities 8 and secured therein by digging or interference of the retention protrusions 26 with the housing slots 28 which provides for a particularly rapid and cost-effective manufacturing of the connector.

The terminal receiving cavities 8 comprise or are bounded by an upper surface or ledge 32 that engages the terminal spring arm 18 for pre-stressing the spring arm of the terminal. The spring arm of the terminal may alternatively be pre-stressed by engagement of the contact portion 14 against an upper central guide surface 34 of a card receiving slot 36 of the connector housing. The attachment section 24 extends vertically to a top end 25 projecting beyond the corner portion 27 that defines the attachment of the spring arm 18 to the connection portion 16. The vertical extensions 25 provide the terminals with a more secure and stable assembly to the housing.

The central upper guide surface 34 defines a portion of the card receiving slot 36 opposite the contact portions 14 of the two rows of terminals. The central upper guide surface 34 is provided on a central wall portion 38 of the housing that extends between opposed side walls 40 of the housing, and inter alia serves to provide a support for supporting the smart card against the resilient biasing force of the terminals 6. In other words, the central supporting wall portion 38 reduces buckling of the smart card under the spring force of the terminals.

An elastic finger 43 projects inwardly from one of the side walls 41 for resiliently engaging an edge of a smart card to hold it in the slot 36. The finger 43 thus process a frictional force in addition to the contacts 14 biased against the card.

The card receiving slot 36 is further defined by front and rear lateral guides 42, 44 that project from inner side surfaces 41 of the side walls 40 proximate card receiving and rear ends 46, 48 respectively of the housing 4. The lateral guides 42, 44 define the upper card abutment or guide surface 35 aligned with the central upper guide surface 34. The lower card guide surface 37 (or lower guide) of the card receiving slot 36, are formed by front and rear housing portions 50, 52 respectively that extend over the spring arm portions 18 of the terminals and define the upper wall portion 32 of the terminal receiving cavities 8 of the first and second rows 10, 9 respectively. The distance (h) between the opposed upper and lower card guide surfaces (34, 35, 37) is defined by the thickest card to be received by the connector 2, for example double thickness smart cards of 1.75 mm thick (whereby single thickness cards have a thickness of approximately 0.8 mm). The card receiving slot has a height (h) that is slightly greater than a double thickness card of 1.75 mm, for example approximately 1.8 mm. In order to prevent single thickness cards from catching under the ends 20 of the second row 9 of terminals, lower central guides 51 with tapered lead in surfaces 53 are provided. The guides 51 extend integrally from the side walls 40 of the housing 4.

The housing wall portions 38, 42, 44, 50, 52 do not overlap each other (viewed in the vertical direction V) such that a simple injection moulding die may be used to produce the housing 4. In particular, the die only requires two moving parts that separate in opposed vertical directions (V), without requiring further moving parts such as moving core pins that move transversely to the vertical direction. The guide surfaces 35, 34, 37 are thus opposite cutouts in the housing that allow access by a moulding die face thereto in the vertical direction (V). The latter thus enables rapid and cost-effective manufacturing whereby the housing 4 may be moulded as an integral part in a single operation, comprising all the elements for receiving, guiding and locating a card in position for electrical connection to the terminals 6. The housing 4 further comprises board mounting and locating studs 56 extending below the mounting face (30) for reception in corresponding holes in the circuit board.

As the terminals 6 are retained to the housing 4 at their mounting sections 24 which are at the connection ends 16, resiliency of the contact portions 14 is provided by a spring arm portion extending from the connection section 16 to the contact portion 14. As the distance (d) between connection portions 22 of the opposed rows 9, 10 of terminals is fixed at approximately 38 mm (the footprint of the connection sections on the PCB is fixed by a standard) the elastic displacement range of the contact portions 14 is maximised in a cost-effective terminal design that is simple to manufacture and cost-effective to assemble in the housing. Single thickness cards, for example of approximately 0.8 mm thickness and double thickness cards of approximately 1.8 mm thickness can thus be received and connected by the connector according to this invention.

## Claims

1. A smart card connector (2) for connection to different thickness smart cards for single to double thickness having conductive circuit pads thereon, the smart card connector comprising an insulative housing (4) and a plurality of electrical terminals (6) arranged in a juxtaposed manner two opposed rows (9, 10) and mounted in corresponding terminal receiving cavities (8) of the housing (4), each terminal comprising a contact portion (14) biased into a card receiving slot (36) of the housing defining a gap height (h) for receiving cards of double thickness, a connection portion (16) for connection to a circuit board, and a spring arm (18) extending therebetween, the circuit board connection portion (16) and spring arm (18) being attached integrally together via an approximately 90° corner portion (27) such that the connection and spring arm portions extend roughly perpendicularly with respect to each other, wherein the terminal (6) is secured to the housing at the connection portion (16) and the spring arm (18) is free to bias within the corresponding terminal receiving cavity (8) towards a circuit board mounting face (30) of the connector housing (4) along substantially the whole length between the connection portion (16) and the contact portion (14).

2. The connector of claim 1 wherein the terminals (6) are pre-stressed by engagement of the contact portions (14) against a central wall portion (38) of the housing, or by engagement of the spring arm (18) proximate an end thereof proximate the contact portion (14) against a upper wall portion (32) defining an upper of the terminal receiving cavities (8).

3. The connector of claim 1 or 2 wherein the terminals (6) are stitched in a vertical direction (V) into the receiving cavities (8) whereby the vertical direction (V) is substantially perpendicular to a direction of insertion (I) of the smart card into the card receiving slot (36).

4. The connector of any one of the preceding claims wherein guide wall portions (38, 42, 44, 50, 52) defining the card receiving slot (36) for guiding the card into the housing and locating the card therein, are arranged with respect to each other in a non-overlapping relationship when viewing in a vertical direction (V) that is substantially orthogonal to a direction of insertion (I) of the smart card into the connector.

5. The connector of any one of the preceding claims wherein the housing (4) is moulded as a single integral part comprising opposed side surfaces (41) for laterally guiding the card in the card receiving slot (36), in addition to upper card guide surfaces (34, 35) for guiding and locating the card with respect to the terminals (6).

6. The connector of any one of the preceding claims wherein the housing (4) comprises a central wall portion (38) extending over the contact portions (14) between and connected to opposed side walls (40) of the housing.

7. The connector of any one of the preceding claims wherein the card slot gap height (h) is approximately 1.8 mm.

8. The connector of any one of the preceding claims wherein the connector housing further comprises a lower central card guide (51) adapted to guide a single thickness card of approximately 0.8 mm thickness over ends (20) of the second row (9) of terminals (6).
